# EUROPÄISCHE PATENTANMELDUNG

(11) **EP 1 519 168 A1**
(43) Veröffentlichungstag der Anmeldung: **30.03.2005**
(21) Anmeldenummer: 03405695.2
(22) Anmeldetag: 24.09.2003
(51) Int. Cl.: G01J 3/45

(54) **Hochauflösendes Fourier-Transform-Spektrometer**

(71) Anmelder: ABB RESEARCH LTD., 8050 Zürich (CH)
(72) Erfinder: Brändle, Hubert, 8102 Oberengstringen (CH); Bohnert, Klaus, 5452 Oberrohrdorf (CH)
(74) Vertreter: ABB Patent Attorneys

(57) **Zusammenfassung**

Das Fourier-Transform-Spektrometer, FTS, auf Basis eines Michelson-Spektrometers beinhaltet mindestens ein erstes Weglängenveränderungsmittel (A1) zur Veränderung optischer Weglängen des ersten Lichtweges (L1) gegenüber optischen Weglängen des zweiten Lichtweges (L2) um einen optischen Wegunterschied 2ε, eine Detektions-Einheit (D) zur Erzeugung mindestens zweier Teil-Interferogramme Iₓ und I_{y}, und eine AuswerteEinheit (8) zur Erzeugung eines Gesamt-Interferogramms I durch Kombination der mindestens zwei Teil-Interferogramme Iₓ und I_{y} und zur Bestimmung eines Spektrums mittels einer Fourier-Transformation des Gesamt-Interferogramms I auf. In mindestens einem der beiden Lichtwege (L1,L2) ist mindestens ein doppelbrechendes Element (5) mit zwei Achsen x,y der Doppelbrechung angeordnet, welche Achsen x,y zwei Polarisationsachsen x,y definieren, und wobei durch das mindestens eine doppelbrechende Element (5) ein optischer Wegunterschied 2δ zwischen x-polarisierten Lichtwellen (Lx) und y-polarisierten Lichtwellen (Ly) erzeugbar ist. Es sind eine Polarisationseinheit (P) und eine Detektions-Einheit (D) vorhanden, mittels der das Licht polarisationsabhängig detektierbar ist, wodurch die Teil-Interferogramme Iₓ und I_{y} erzeugbar sind. Das FTS hat eine hohe Auflösung und kann sehr kompakt ausgeführt werden.

## Beschreibung

### Technisches Gebiet

Die Erfindung bezieht sich auf das Gebiet der optischen Spektroskopie, insbesondere auf die Fourier-Transform-Spektroskopie. Sie bezieht sich auf ein Fourier-Transform-Spektrometer und auf ein Spektroskopie-Verfahren gemäss dem Oberbegriff der unabhängigen Patentansprüche.

### Stand der Technik

Fourier-Transform-Spektrometer (FTS) sind bereits seit vielen Jahrzehnten bekannt und werden beispielsweise zur qualitativen und quantitativen Bestimmung von chemischen Zusammensetzungen eingesetzt. Gewöhnlich wird dabei das Absorptionsspektrum einer zu analysierenden Probe im infraroten Wellenlängenbereich gemessen. Der optische Aufbau eines herkömmlichen FTS entspricht im wesentlichen dem eines Michelson-Interferometers. Es weist zwei Arme auf, die dadurch gebildet werden, dass Licht einer Lichtquelle mittels eines Strahlteilers in zwei Teilstrahlen aufgeteilt wird, wobei die Teilstrahlen jeweils an einem Spiegel am Ende des jeweiligen Armes reflektiert und an dem Strahlteiler wieder zusammengeführt werden. Zur Änderung des optischen Wegunterschiedes zwischen den beiden Teilstrahlen wird mindestens einer der Spiegel entlang der Strahlrichtung bewegt. Die Lichtintensität der zwei wieder zusammengeführten, interferierenden Teilstrahlen wird mittels eines Detektors detektiert. Diese Lichtintensität, aufgezeichnet in Abhängigkeit des Wegunterschiedes, stellt ein Interferogramm dar. Das zu bestimmende optische Spektrum, beispielsweise einer im Lichtweg angeordneten gasförmigen Probe, wird über eine Fourier-Transformation aus dem Interferogramm bestimmt.

Gegenüber anderen Spektrometern haben FTS den Vorteil, dass während des ganzen Messvorgangs die volle Lichtleistung am Detektor zur Verfügung steht. Im Unterschied dazu wird bei einem konventionellen, dispersiven Spektrometer zu einem gegebenen Zeitpunkt immer nur ein kleiner Ausschnitt aus dem Spektrum detektiert. Die spektrale Auflösung eines FTS wird im allgemeinen in cm⁻¹ angegeben und beträgt 1 /Δsₘₐₓ, wobei Δsₘₐₓ den maximalen Wegunterschied in cm darstellt. In der Praxis kann man mit Wegunterschieden bis in den Bereich von 1 m arbeiten, womit ausserordentlich hohe Auflösungen erreicht werden.

Grundlagen und weitere Details zur Fourier-Transform können beispielsweise dem Buch P.R. Griffiths, "Chemical infrared Fourier transform spectroscopy", John Wiley, New York 1975 und der Veöffentlichung E.V. Loewenstein, "The history and current status of Fourier transform spectroscopy", Appl. Optics, 5, 845, 1966 entnommen werden.

In der Patentschrift US 5'422'721 ist ein FTS mit verbesserter Auflösung beschrieben. Anstatt jeden Interferometer-Arm mit genau einem Spiegel zu versehen ist einer der Interferometer-Arme mit einer Vielzahl von Spiegeln versehen, welche in verschiedenen optischen Abständen zu dem Strahlteiler nebeneinander im Lichtweg angeordnet sind. Auf diese Weise entsteht nach dem Zusammenführen der Lichtwellen der beiden Interferometer-Arme eine Vielzahl von optischen Wegen mit unterschiedlichen Weglängenunterschieden. Wird der in dem anderen Interferometer-Arm angeordnete Spiegel in Strahlrichtung bewegt, und wird jedem dieser optischen Wege ein Detektor zugeordnet, so kann eine Vielzahl von Interferogrammen bei verschiedenen Weglängenunterschieden gleichzeitig aufgenommen werden. Mittels einer Signalverarbeitung können diese Teil-Interferogramme zu einem Gesamt-Interferogramm zusammengefügt werden, aus welchem mittels Fourier-Transformation das Spektrum gewonnen wird.

Ein solches FTS hat den Nachteil, dass es aufgrund der Vielzahl von Spiegeln schwierig zu justieren und mechanisch nicht sehr robust ist.

### Darstellung der Erfindung

Es ist deshalb Aufgabe der Erfindung, ein Spektrometer und ein Spektroskopie-Verfahren der eingangs genannten Art zu schaffen, welche die oben genannten Nachteile nicht aufweisen. Insbesondere soll ein Fourier-Transform-Spektrometer (FTS) geschaffen werden, welches mechanisch robust ist und Messungen mit hoher spektraler Auflösung und/oder hoher Zeitauflösung ermöglicht.

Diese Aufgabe löst eine Vorrichtung und ein Verfahren mit den Merkmalen der unabhängigen Patentansprüche.

Ein erfindungsgemässes Spektrometer umfasst
- eine Lichtquelle zur Erzeugung kollimierten polychromatischen Lichts,
- einen Strahlteiler zur Aufteilung des Lichtes auf einen ersten Lichtweg und einen zweiten Lichtweg und zum Zusammenführen des Lichtes nach Durchlaufen des ersten Lichtweges beziehungsweise des zweiten Lichtweges,
- mindestens ein erstes Weglängenveränderungsmittel zur Veränderung optischer Weglängen des ersten Lichtweges gegenüber optischen Weglängen des zweiten Lichtweges um einen optischen Wegunterschied 2ε,
- eine Detektions-Einheit zur Erzeugung mindestens zweier Teil-Interferogramme Iₓ und I_{y}, und
- eine Auswerte-Einheit zur Erzeugung eines Gesamt-Interferogramms I durch Kombination der mindestens zwei Teil-Interferogramme Iₓ und I_{y} und zur Bestimmung eines Spektrums mittels einer Fourier-Transformation des Gesamt-Interferogramms I.

Es ist dadurch gekennzeichnet,
- dass in mindestens einem der beiden Lichtwege mindestens ein doppelbrechendes Element mit zwei zueinander orthogonalen Achsen x,y der Doppelbrechung angeordnet ist, welche Achsen x,y zwei Polarisationsachsen x,y definieren, und wobei durch das mindestens eine doppelbrechende Element ein optischer Wegunterschied 2δ zwischen x-polarisierten Lichtwellen und y-polarisierten Lichtwellen erzeugbar ist,
- dass eine Polarisationseinheit vorhanden ist, mittels der aus dem zusammengeführten Licht ein Strahl im wesentlichen x-polarisierten Lichts und ein Strahl im wesentlichen y-polarisierten Lichts erzeugbar ist, und
- dass mittels der Detektions-Einheit der Strahl im wesentlichen x-polarisierten Lichts detektierbar, und durch Messung der detektierten Intensität des im wesentlichen x-polarisierten Lichts als Funktion des Wegunterschiedes 2ε das mindestens eine Teil-Interferogramm Iₓ erzeugbar ist, und
- dass mittels der Detektions-Einheit der Strahl im wesentlichen y-polarisierten Lichts detektierbar, und durch Messung der detektierten Intensität des im wesentlichen y-polarisierten Lichts als Funktion des Wegunterschiedes 2ε das mindestens eine Teil-Interferogramm I_{y} erzeugbar ist.

Dadurch wird es möglich, eine hohe spektrale Auflösung zu erreichen, wobei das FTS dennoch mechanisch robust ausführbar ist. Ein einziges in einem der Lichwege angeordnetes doppelbrechendes Element ermöglicht eine Verdopplung der spektralen Auflösung, wozu in der genannten US 5'422'721 zwei präzis zu justierende Spiegel benötigt werden.

Kurz und knapp kann ein solches FTS im wesentlichen als ein Michelson-Interferometer verstanden werden, bei dem in mindestens einem der Arme mindestens ein doppelbrechendes Element angeordnet ist, und wobei das zusammengeführte Licht polarisationsabhängig detektiert wird.

Das mindestens eine doppelbrechende Element erzeugt polarisationsabhängige Weglängenunterschiede.

Durch die Erzeugung von Teil-Interferogrammen bei verschiedenen Weglängenunterschieden kann die spektrale Auflösung verbessert werden und/oder die Messzeit verkürzt werden und/oder, weil geringere Spiegelbewegungen notwendig sind, das FTS kleiner und robuster ausgeführt werden.

In einer bevorzugten Ausführungsform ist der Wegunterschied 2ε grösser oder gleich dem Wegunterschied 2δ. Dadurch sind die Weglängenunterschiedsbereiche der verschiedenen Teil-Interferogramme überlappend oder mindestens aneinandergrenzend, so dass keine Lücken im Weglängenunterschiedsbereich des Gesamt-Interferogramms vorhanden sind, so dass eine präzise Spektrenbestimmung möglich ist. Vorteilhaft ist 2ε = 2δ, so dass keine unnötigen Weglängenveränderungen (Spiegelbewegungen) gemacht werden. Aus Redundanz- und/oder Kontroll-Gründen können Überlappungen der Teil-Interferogramme aber von Vorteil sein.

Bevorzugt sind die Achsen x,y der Doppelbrechung im wesentlichen senkrecht zur Strahlrichtung des das doppelbrechende Element durchstrahlenden Lichts ausgerichtet, und sind diejenigen Flächen des doppelbrechenden Elementes, durch welche das Licht in das doppelbrechende Element einstrahlt oder durch welche das Licht das doppelbrechende Element verlässt, im wesentlichen senkrecht zur Strahlrichtung des das doppelbrechende Element durchstrahlenden Lichts ausgerichtet. Dadurch wird erreicht, dass x-polarisierte und y-polarisierte Lichtwellen im Kristall in unveränderter Richtung laufen, und dass es keinen Versatz zwischen den x- und den y-polarisierten Lichtwellen gibt.

In einer besonders vorteilhaften Ausführungsform ist in mindestens einem der beiden Lichtwege das mindestens eine doppelbrechende Element derart ausgebildet und/oder ist in mindestens einem der beiden Lichtwege oder in beiden Lichtwegen zusammen mehr als ein doppelbrechendes Element so angeordnet, dass in dem zusammengeführten Licht N ≥ 2 Strahlenbündel gebildet sind, welche N Wegunterschiede 2δ,2δ'... zwischen x-polarisierten Lichtwellen und y-polarisierten Lichtwellen aufweisen, und es sind N Teil-Interferogramme Iₓ,Iₓ'... und mindestens N Teil-Interferogramme I_{y},I_{y}'... erzeugbar.

Dadurch kann die Auflösung des FTS weiter verbessert werden. Nicht nur innerhalb eines Stahlenbündels werden Wegunterschiede zwischen x- und y-polarisierten Lichtwellen erzeugt, sondern es ist auch noch möglich, zwischen verschiedenen Strahlenbündeln Wegunterschiede zu erzeugen, so dass durch eine einzige Spiegelbewegung eine Vielzahl von Interferogrammen erzeugbar ist. Es kann beispielsweise ein doppelbrechender Kristall mit stufenförmigem Profil so in einem der Lichwege angeordnet sein, dass zwei oder mehr Strahlenbündel erzeugt werden, welche voneinander verschiedene (optische) Weglängen in dem Kristall zurücklegen, wodurch die Strahlenbündel voneinander verschiedene Weglängenunterschiede erfahren (sowohl für x-polarisierte als auch für y-polarisierte Lichtwellen), und wobei innerhalb jedes der Strahlenbündel x-polarisierte und y-polarisierte Lichtwellen voneinander verschiedene Weglängenunterschiede erfahren. Gleichwirkend sind selbstverständlich auch zwei oder mehr im Strahlengang seitlich versetzte doppelbrechende Kristalle gleichen doppelbrechenden Materials mit unterschiedlichen Dicken. Durch Einsatz verschiedener doppelbrechender Materialien in unterschiedlicher oder gleicher Dicke kann ebenfalls derselbe Effekt erzielt werden, wobei weitere Freiheitsgrade entstehen, da die Weglängenunterschiede, die die verschiedenen Strahlenbündel erfahren, unabhängig von den Weglängenunterschieden, welche innerhalb jedes der Strahlenbündel x-polarisierte und y-polarisierte Lichtwellen erfahren, gewählt werden können, sofern die Brechungsindices und Doppelbrechungen der Materialien dies erlauben.

In der genannten besonders vorteilhaften Ausführungsform können vorteilhaft die Wegunterschiede 2ε und 2δ,2δ',2δ''... so gewählt werden, dass die Teil-Interferogramme Iₓ,I_{y},Iₓ',I_{y}' zu einem zusammenhängenden Gesamt-Interferogramm kombinierbar sind. Dies kann mit einem minimierten Überlapp von Teil-Interferogrammen geschehen, so dass mit einem minimalem Spiegelhub ε ein hochaufgelöstes Spektrum erzeugbar ist.

Vorteilhaft beinhaltet das mindestens eine Weglängenveränderungsmittel einen piezoelektrischen Aktuator, einen mikromechanischen Antrieb oder einen elektrooptischen Modulator. Diese typischerweise mit einem einen Interferometerarm begrenzenden Spiegel zusammenwirkenden Mittel sind sehr gut für die präzise Erzeugung von Weglängenveränderungen geeignet und ausserdem von geringen Abmessungen, so dass ein sehr kleines, kompaktes und somit robustes FTS realisierbar ist. Der elektrooptische Modulator hat ausserdem den Vorteil, dass durch ihn Weglängenunterschiede veränderbar sind, ohne dass mechanisch bewegliche Teile involviert sind. Ein FTS mit einem elektrooptischen Modulator kann somit besonders robust sein.

Eine weitere vorteilhafte Ausführungsform kennzeichnet sich dadurch, dass in dem zweiten Lichtweg ein zweites Weglängenveränderungsmittel zur Veränderung optischer Weglängen des zweiten Lichtweges vorhanden ist. In den beiden Lichtwegen ist also je mindestens ein Weglängenveränderungsmittel vorhanden. Dadurch sind grössere Wegunterschiede realisierbar. Vorteilhaft werden die Weglängen der zwei Lichtwege gegenphasig verändert. Insbesondere bei piezoelektrischen oder elektrooptischen Weglängenveränderungsmitteln kann dies vorteilhaft mit nur einer Spannungsquelle realisiert werden, mit welcher die Weglängenveränderungsmittel mit derselben elektrischen Spannung V(t) in entsprechender Polung beaufschlagt werden.

Eine vorteilhafte Ausführungsform hat die Eigenschaft, dass die Polarisationseinheit pro doppelbrechendem Element mindestens zwei Polarisatoren aufweist, und dass die Detektionseinheit pro Polarisator je einen Detektor aufweist. In dieser Ausführungsform steht für jedes Teil-Interferogramm ein Polarisator und ein Detektor zur Verfügung. Dadurch können alle Teil-Interferogramme gleichzeitig aufgenommen werden, so dass das Spektrum in minimaler Zeit bestimmt werden kann.

Eine andere vorteilhafte Ausführungsform kennzeichnet sich dadurch, dass die Polarisationseinheit pro doppelbrechendem Element mindestens je einen Polarisator aufweist, und dass die Detektionseinheit pro Polarisator je einen Detektor aufweist, wobei die Polarisatoren drehbar sind oder die Polarisationseinheit pro doppelbrechendem Element mindestens je eine Polarisationskontrolleinheit aufweist.

Diese Ausführungsform benötigt relativ wenige Polarisatoren und Detektoren; ein gleichzeitiges Messen von x- und y-polarisiertem Licht ist aber nicht möglich. Die Auswahl, ob ein solcher Polarisator x- oder y-polarisierte Lichtwellen durchlässt, kann durch Drehen des Polarisators (um 90°) geschehen. Aufwendiger, dafür aber ohne mechanisch bewegte Teile, kann eine Polarisationskontrolleinheit die Polarisation des Lichtes drehen. Eine solche Polarisationskontrolleinheit kann vorteilhaft auf Basis einer Flüssigkristallzelle, eines elektro-optischen Kristalls oder eines magnetooptischen Rotators (Faraday-Rotator) ausgestaltet sein. Die drei genannten Polarisationskontrolleinheiten sind eher mit relativ schmalbandigem Licht einsetzbar, da die Drehung der Polarisationsebene wellenlängenabhängig ist, und somit nicht über einen grossen Wellenlängenbereich eine 90°-Drehung der Polarisationseben erreicht wird.

Weitere vorteilhafte Ausführungsformen kennzeichnen sich dadurch, dass der Strahlteiler und die von drehbaren Polarisatoren freie Polarisationseinheit und die Detektionseinheit mechanisch aneinander fixiert sind, und/oder der Strahlteiler und das mindestens eine doppelbrechende Element und ein in demjenigen Lichtweg, in welchem das mindestens eine doppelbrechende Element angeordnet ist, angeordneter Spiegel mechanisch aneinander fixiert sind. Dadurch wird ein besonders robustes FTS realisiert.

Das erfindungsgemässe Verfahren zur Bestimmung eines optischen Spektrums, wobei kollimiertes polychromatisches Licht auf zwei Lichtwege aufgeteilt und wieder zusammengeführt wird, wobei mittels eines Weglängenveränderungsmittels optische Weglängen des ersten Lichtweges gegenüber optischen Weglängen des zweiten Lichtweges um einen optischen Wegunterschied 2ε verändert werden, wobei mindestens zwei Teil-Interferogramme Iₓ und I_{y} aufgenommen werden, und wobei die mindestens zwei Teil-Interferogramme Ix und Iy zu einem Gesamt-Interferogramm I kombiniert werden, und wobei das Spektrum mittels einer Fourier-Transformation des Gesamt-Interferogramms I bestimmt wird, ist dadurch gekennzeichnet, dass
- in mindestens einem der beiden Lichtwege mindestens ein doppelbrechendes Element mit zwei zueinander orthogonalen Achsen x,y der Doppelbrechung angeordnet wird, durch welche Achsen x,y zwei Polarisationsachsen x,y definiert werden, und wobei durch das mindestens eine doppelbrechende Element ein optischer Wegunterschied 2δ zwischen x-polarisierten Lichtwellen und y-polarisierten Lichtwellen erzeugt wird,
- aus dem zusammengeführten Licht gleichzeitig oder zeitlich versetzt ein Strahl im wesentlichen x-polarisierten Lichts und ein Strahl im wesentlichen y-polarisierten Lichts erzeugt wird,
- der Strahl im wesentlichen x-polarisierten Lichts detektiert wird und durch Messung der detektierten Intensität des im wesentlichen x-polarisierten Lichts als Funktion des Wegunterschiedes 2ε das mindestens eine Teil-Interferogramm Iₓ erzeugt wird, und
- der Strahl im wesentlichen y-polarisierten Lichts detektiert wird und durch Messung der detektierten Intensität des im wesentlichen y-polarisierten Lichts als Funktion des Wegunterschiedes 2ε das mindestens eine Teil-Interferogramm I_{y} erzeugt wird.

Die Vorteile des Verfahrens und die weiteren vorteilhaften und bevorzugten Verfahren sowie deren Vorteile ergeben sich aus dem oben geschriebenen.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch:
- Fig. 1: ein Fourier-Transform-Spektrometer (FTS) mit einem doppelbrechenden Element und zwei Polarisatoren;
- Fig. 2: ein aus zwei Teil-Interferogrammen bestehendes Gesamt-Interferogramm;
- Fig. 3: ein FTS mit zwei Antrieben und aneinander fixierten Bestandteilen;
- Fig. 4: ein FTS mit zwei doppelbrechenden Elementen und vier Polarisatoren;
- Fig. 5: ein aus vier Teil-Interferogrammen bestehendes Gesamt-Interferogramm;
- Fig. 6: ein FTS mit einem doppelbrechenden Element und einem drehbaren Polarisator;
- Fig. 7: ein FTS mit einem doppelbrechenden Element, einer Polarisationskontrolleinheit und einem Polarisator;
- Fig. 8: ein FTS mit einem doppelbrechenden Element, einem elektrooptischen Modulator und aneinander fixierten Bestandteilen.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

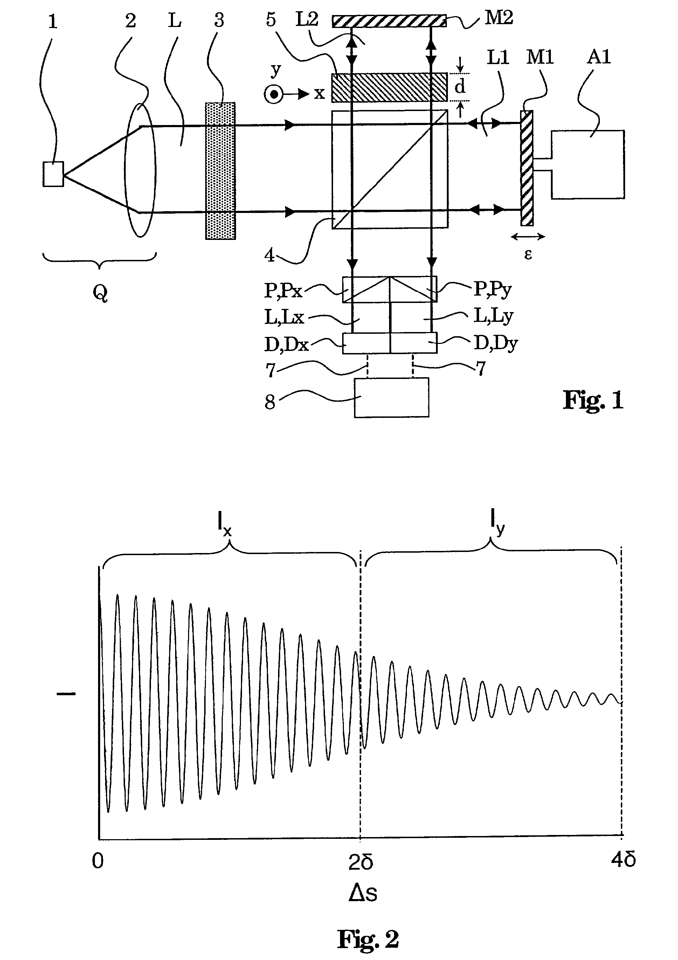

Fig. 1 zeigt ein erfindungsgemässes Fourier-Transform-Spektrometer (FTS). Eine Lichtquelle Q erzeugt polychromatisches kollimertes Licht L. Das Licht L ist durch seine Randstrahlen dargestellt. Die Lichtquelle Q umfasst einen Lichterzeuger 1 und einen Kollimator 2. In dem Lichtstrahl L ist eine Probe 3 angeordnet. Das optische Spektrum der Probe 3 ist mittels des als Absorptionsspektrometer wirkenden FTS zu bestimmen. Nach Durchlaufen der Probe 3 wird das Licht L mittels eines Strahlteilers 4 aufgeteilt. Zwei Lichtwege L1,L2 entstehen. Der erste Lichtweg L1 weist einen Spiegel M1 auf, durch welchen das Licht des ersten Lichtweges L1 reflektiert wird. Der Spiegel M1 ist an dem geometrischen Ende eines ersten Interferometer-Arms des FTS angeordnet. In Wirkverbindung mit dem Spiegel M1 ist ein Antrieb A1 als ein erstes Weglängenveränderungsmittel A1 angeordnet. Dieser kann beispielsweise als ein mikromechanischer oder elektromagnetischer Antrieb ausgebildet sein. Mittels des ersten Weglängenveränderungsmittels A1 ist der Spiegel M1 entlang des ersten Lichtweges L1 bewegbar. Während einer Messung wird der Spiegel M1 um eine optische Strecke ε entlang der Strahlrichtung bewegt. Dadurch wird die optische Weglänge des ersten Lichtweges L1 um 2ε verändert. Die Strecke ε entspricht auch dem Spiegelhub, sofern ein Brechungsindex von 1 im Bereich des Spiegels M1 vorliegt, wovon der Einfachheit halber ausgegangen wird.

Der zweite Lichtweg L2 weist einen Spiegel M2 auf, welcher in Fig. 1 fixiert, also nicht bewegbar ist. Zwischen dem Strahlteiler 4 und dem Spiegel M2 is ein doppelbrechendes Element 5 angeordnet. Das doppelbrechende Element 5, vorteilhaft ein doppelbrechender Kristall 5, beispielsweise Calcit (Kalkspat) oder Quarz, weist zwei Achsen x,y der Doppelbrechung auf. Eine der Achsen ist die sogenannte schnelle Achse, die andere die sogenannte langsame Achse. Licht mit einer Polarisation parallel zur schnellen Achse "sieht" einen kleineren Brechungsindex als Licht mit einer Polarisation parallel zur langsamen Achse, und breitet sich somit schneller in dem elektrooptischen Element 5 aus als das parallel zur langsamen Achse polarisierte Licht. Der Brechungsindex für entlang einer der beiden Achsen x,y polarisiertes Licht ist der sogenannte ordentliche Brechungsindex no; der Brechungsindex für entlang der anderen Achse y,x polarisiertes Licht ist der sogenannte ausserordentliche Brechungsindex nₑ. Die Doppelbrechung Δn ist die Differenz zwischen no und nₑ: Δn = |n₀ - nₑ|.

Die Ein- und Austrittsflächen des doppelbrechende Elementes stehen vorteilhaft senkrecht zur Strahlrichtung im zweiten Lichtweg L2. Und die Achsen x,y stehen ebenfalls vorteilhaft senkrecht zur Strahlrichtung im zweiten Lichtweg L2. Weiter sind, wie in Fig. 1 dargestellt, die Achsen x,y parallel zu denjenigen Kanten des Strahlteilers 4 ausgerichtet, die die Fläche begrenzen, durch die der Lichtweg L2 verläuft (Strahlteiler mit quadratischer Grundfläche angenommen). Allgemeiner liegt eine der Achsen x,y (in Fig. 1: x) vorteilhaft innerhalb der von den Lichtwegen L1,L2 aufgespannten Ebene, während die andere der Achsen y,x (in Fig. 1: y) senkrecht zu dieser Ebene steht.

Zwischen denjenigen Lichtwellen, welche eine parallel zur Achse x ausgerichtete Polarisation aufweisen (x-polarisierte Lichtwellen), und denjenigen Lichtwellen, welche eine parallel zur Achse y ausgerichtete Polarisation aufweisen (y-polarisierte Lichtwellen), ergibt sich bei einmaligem Durchlaufen des elektrooptischen Elementes 5 ein optischer Wegunterschied von δ = d·Δn, wobei d die Dicke des doppelbrechenden Elementes 5 senkrecht zur Strahlrichtung angibt. Nach Reflexion am Spiegel M2 durchläuft der Lichtweg L2 ein zweites mal das doppelbrechende Element 5, so dass sich insgesamt ein optischer Wegunterschied von 2δ = 2d ·Δn zwischen x- und y- polarisierten Lichtwellen ergibt. Dabei wird angenommen, dass der Unterschied zwischen den Gruppenbrechungsindices, welcher für den Wegunterschied massgeblich ist, gleich Δn ist.

Im Strahlteiler 4 werden die Lichtwege L1,L2 wieder zusammengeführt. Das zusammengeführte Licht wird dann einer Polarisationseinheit P zugeführt, und das von der Polarisationseinheit P transmittierte Licht wird einer Detektionseinheit D zugeführt. Über Signalleitungen 7 werden die mittels der Detektionseinheit D detektierten Intensitäten oder Interferogramme einer Signalverarbeitung übermittelt.

Die Polarisationseinheit P in Fig. 1 besteht im wesentlichen aus zwei vorteilhaft senkrecht zur Lichtausbreitungsrichtung ausgerichteten und im Strahlengang nebeneinander angeordneten Polarisatoren Px,Py, deren Durchlassrichtungen parallel zur Polarisationsachse von x- beziehungsweise y-polarisiertem Licht ausgerichtet sind. Je einem Polarisator Px,Py ist ein Detektor Dx,Dy der Detektionseinheit zugeordnet, der das von dem entsprechenden Polarisator Px,Py transmittierte Licht Lx,Ly detektiert.

Zwischen Lichtwellen, die den Lichweg L1 zurückgelegt haben und Lichtwellen, die den Lichtweg L2 zurückgelegt haben, liegt ein mittels des Antriebs A1 um 2ε veränderbarer Wegunterschied vor. Zwischen den x-polarisierten Lichtwellen, die den Lichtweg L2 zurückgelegt haben, und den y-polarisierten Lichtwellen, die den Lichtweg L2 zurückgelegt haben, liegt ein konstanter Wegunterschied 2δ vor. Vorteilhaft ist 2δ = 2ε gewählt. Vorteilhaft ist auch die optische Weglänge des Lichtweges L2 für entlang der schnellen Achse (dies sei in Fig. 1 die Achse x) polarisierte Lichtwellen gleich gross gewählt wie die minimale optische Weglänge des ersten Lichtweges L1.

Wird nun mittels des Weglängenveränderungsmittels A1 die optische Weglänge des ersten Lichtweges L1 kontinuierlich oder in Schritten vergrössert, so können an den Detektoren Dx,Dy zwei verschiedene Interferogramme detektiert werden.

Fig. 2 zeigt schematisch ein Gesamt-Interferogramm I, wie es mit einem FTS gemäss Fig. 1 in der beschriebenen Art erzeugt sein könnte. Die Variable Δs bezeichnet einen allgemeinen Wegunterschied von Lichtwellen eines Interferogramms. Das Gesamt-Interferogramm I besteht aus zwei Teil-Interferogrammen Iₓ und I_{y}, wobei Iₓ mittels des Detektors Dx und I_{y} mittels des Detektors Dy detektiert wurde. Das Teil-Interferogramm Iₓ fängt bei einem Wegunterschied Δs=0 an und erstreckt sich bis zu einem Wegunterschied Δs=2ε, entsprechend Δs=2δ (da 2δ = 2ε gewählt war). Das zweite Teil-Interferogramm I_{y} fängt bei einem Wegunterschied Δs=2δ an und erstreckt sich bis zu einem Wegunterschied Δs=2δ+2ε, entsprechend Δs=4δ (da 2δ = 2ε gewählt war). Aufgrund der Wahl von 2δ = 2ε überlappen sich die Teil-Interferogramme nicht, sondern grenzen genau aneinander.

In der Signalverarbeitung 8 werden die beiden Teil-Interferogramme Iₓ,I_{y} zusammengefügt und das so entstandene Gesamt-Interferogramm I fouriertransformiert, um das gewünschte Spektrum zu erhalten.

Die Auflösung eines FTS ist proportional zu der optischen Weglänge, über die die fourier-transformierten Interferogramme aufgenommen sind. Mittels des in Fig. 1 dargestellten FTS kann bei gleichem Spiegelhub ε eine doppelt so hohe Auflösung erzielt werden wie ohne ein doppelbrechendes Element 5.

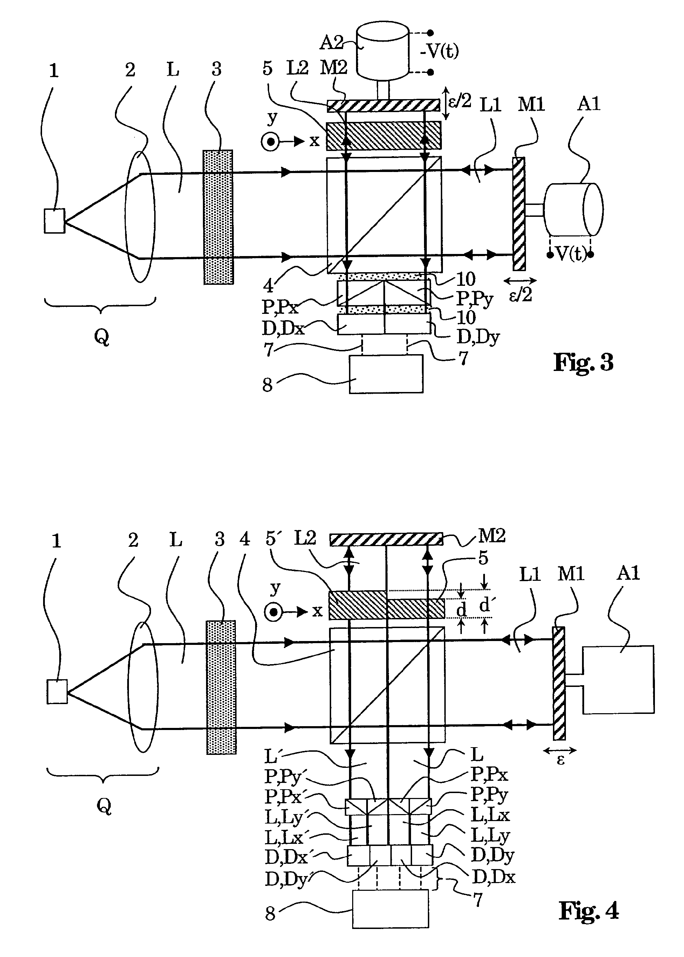

In Fig. 3 ist eine weitere vorteilhafte Ausführungsform der Erfindung dargestellt. Sie entspricht weitgehend der in Fig. 1 dargestellten Ausführungsform und wird ausgehend davon beschrieben. Das in Fig. 3 dargestellt FTS weist zwei Weglängenveränderungsmittel A1,A2 auf. Diese sind hier als gleichartige piezoelektrische Aktuatoren A1,A2 ausgebildet. Die beiden Antriebe A1,A2 werden vorteilhaft von derselben, nicht-dargestellten Spannungsversorgung mit derselben veränderlichen elektrischen Spannung V(t) beaufschlagt, wobei die Polung der Spannung so gewählt ist, dass sich eine gegenphasige Bewegung der Spiegel M1,M2 ergibt (L1 wird in gleichem Masse verlängert wie L2 gleichzeitig verkürzt wird und umgekehrt). Zusammen bewirken die zwei Weglängenveränderungsmittel A1,A2 eine Weglängenveränderung von 2ε, wobei sich jeder der Spiegel M1 ,M2 bloss um ε/2 bewegt.

Ein weiterer Unterschied zu dem in Fig. 1 dargestellten FTS ist, dass der Strahlteiler 4, die Polarisationseinheit P und die Detektionseinheit D mechanisch aneinander fixiert sind. Dies ist hier mittels eines Verbindungsmittels 10, vorzugsweise einem Kleber 10, realisiert. Dadurch wird das FTS sehr klein und robust. Es können auch andere und weitere Bestandteile des FTS vorteilhaft mechanisch aneinander fixiert sein. Die Fixierung kann stoffschlüssig, formschlüssig oder kraftschlüssig realisiert werden.

Ein Zahlenbeispiel: Mit piezoelektrischen Aktuatoren bestehend aus einer piezoelektrischen Keramik können typischerweise Spiegelauslenkungen bis zu 100 µm und mehr erzeugt werden. Je nach Materialzusammensetzung liegt die dafür erforderliche Spannung zwischen 100 und 1000 V. Die Aktuatorlänge liegt bei einer maximalen Auslenkung von 100 µm typischerweise zwischen 100 mm und 150 mm. Bei kleineren Maximalauslenkungen kann die Länge der Aktuatoren A1,A2 entsprechend kürzer gewählt werden.

Annahmen: Spiegelauslenkung ε = 50 µm, doppelbrechendes Element 5 aus Calcit mit Δn = 0.17. Die Dicke des doppelbrechenden Elementes 5 muss d = ε/ Δn = 0.294 mm gewählt werden, wenn nur einer der zwei in Fig. 2 gezeigten Antriebe A1,A2 eingesetzt wird. Die spektrale Auflösung, beispielsweise für eine Lichtwellenlänge von λ = 1000 nm, beträgt dann Δλ=λ² / (4 Δs) = 5 nm. Die Auflösung wird um einen Faktor 2 verbessert, also Δλ = 2.5 nm, wenn auch der Spiegel M2 bewegt wird, und zwar gegenphasig mit gleichem Hub ε.

Fig. 4 zeigt eine Ausführungsform mit weiter verbesserter Auflösung. Sie wird ausgehend von Fig. 1 beschrieben. Anstelle eines einzigen doppelbrechenden Elementes 5 sind zwei doppelbrechende Elemente 5,5' im Lichtweg L2 angeordnet. Die beiden doppelbrechende Elemente 5,5' sind in Fig. 4 nebeneinander im Strahlengang des zweiten Lichtweges L2 angeordnet. Es wird der Einfachheit halber vorerst davon ausgegangen, dass beide doppelbrechendenden Elemente 5,5' dasselbe doppelbrechende Material, beispielsweise kristallinen Kalkspat, aufweisen. Das doppelbrechende Element 5 hat eine Dicke d in Durchstrahlrichtung, das doppelbrechende Element 5' hat eine Dicke d' in Durchstrahlrichtung. Für den Wegunterschied δ' zwischen x- und y-polarisiertem Licht nach einmaligem Durchlaufen des doppelbrechenden Elementes 5' gilt: δ' = d' ·Δn. Wenn man annimmt, dass der ordentliche Brechungsindex no grösser ist als der ausserordentliche Brechungsindex nₑ, also n₀ > nₑ, so wird vorteilhaft die Dicke d'so gewählt, dass im doppelbrechenden Element 5' die einfache Weglänge durch das doppelbrechende Element 5' für den ausserordentlichen Strahl (Brechungsindex nₑ) um δ = d·Δn grösser ist als die einfache Weglänge für den ordentlichen Strahl (Brechungsindex n₀) durch das doppelbrechende Element 5'der Dicke d. Daraus ergibt sich zwischen den Dicken d und d' der Zusammenhang d' = d·(2n₀/nₑ - 1).

Entsprechend gilt für den Wegunterschied δ' zwischen x- und y-polarisiertem Licht nach einmaligem Durchlaufen des doppelbrechenden Elementes 5': δ' = d' ·Δn = d·Δn·(2n₀/nₑ - 1). Bei einem Spiegelhub von ε = δ ergäben sich so die folgenden Weglängen-Bereiche für die mit dem FTS aus Fig. 4 aufnehmbaren Teil-Interferogramme Iₓ,I_{y},Iₓ',I_{y}':
Iₓ: [0 → 2ε] ≙ [0 → 2δ]
I_{y}: [2δ → 2δ + 2ε] ≙ [2δ → 4δ]
Iₓ': [4δ → 4δ + 2ε] ≙ [4δ → 6δ]
I_{y}': [6δ + 2δ* → 6δ + 2δ* + 2ε] ≙ [6δ + 2δ* → 8δ + 2δ*]

Dabei ist δ* gegeben als δ* = Δn·(d'-d) = δ'-δ. Das dritte und das vierte Teil-Interferogramm grenzen, im Gegensatz zu den anderen drei Teil-Interferogrammen, nicht aneinander. Die entstehende Lücke würde zu Ungenauigkeiten in dem durch Fourier-Transformation aus den Teil-Interferogrammen entstandenen Spektrum führen. Um eine solche Lücke zu verhindern kann vorteilhaft der Spigelhub ε grösser gewählt werden. Um die Lücke exakt zu schliessen und somit das dritte an das vierte Teil-Interferogramm genau angrenzen zu lassen, wird ε = δ + δ* = δ' gewählt. Entsprechend ergibt sich dann für die Weglängen-Bereiche für die mit dem FTS aus Fig. 4 aufnehmbaren Teil-Interferogramme Iₓ,I_{y},Iₓ',I_{y}':
Iₓ: [0 → 2ε] ≙ [0 → 2δ + 2δ*]
I_{y}: [2δ → 2δ + 2ε] ≙ [2δ → 4δ + 2δ*]
Iₓ': [4δ → 4δ + 2ε] ≙ [4δ → 6δ + 2δ*]
I_{y}': [6δ + 2δ* → 6δ + 2δ* + 2ε] ≙ [6δ + 2δ*→ 8δ + 4δ*]

Die ersten drei Teil-Interferogramme Iₓ,I_{y},Iₓ' überlappen sich also um 2δ*. Eine gewisse Überlappung der Abtastbereiche kann ohnehin vorteilhaft sein, da man auf diese Weise bei der Signalverarbeitung eventuelle Unsicherheiten in den Weglängenunterschieden korrigieren kann.

Für N Strahlenbündel, wie sie beispielsweise durch N doppelbrechende Elemente 5,5',5''... in einem der Lichtwege L1,L2 gebildet werden können, wird also vorteilhaft im Falle gleicher doppelbrechender Materialien der doppelbrechenden Elemente 5,5',5''... der Spiegelhub ε = δ + (N-1)·δ* gewählt und δ' = δ + δ* ; δ'' = δ + 2·δ* ; δ''' = δ + 3·δ* ; ... .

Für den Fachmann versteht es sich von selbst, dass anstelle zweier doppelbrechender Elemente 5,5' ein einziges doppelbrechendes Element 5 hätte genommen werden können, welches entsprechend ausgebildet wäre; in diesem Fall also ein stufenförmiges Profil aufgewiesen hätte. Ebenso kann dieselbe Wirkung erzielt werden, wenn das doppelbrechende Element 5 der Dicke d sich über die gesamte Breite des Lichtweges L2 erstreckt und das doppelbrechende Element 5' (mit der Dicke d'-d) sich im Strahlengang vor oder hinter dem doppelbrechenden Element 5 befindet und sich senkrecht zur Strahlrichtung nur über die gewünschte Breite des Strahlenbündels L' erstreckt.

Ebenso selbstverständlich ist es, dass im Falle mehrerer doppelbrechender Elemente 5,5' diese unterschiedliche doppelbrechende Materialien und insbesondere unterschiedliche nₑ, n₀, und Δn aufweisen können. Mittels eines entsprechend geformten und/oder mehreren doppelbrechenden Elementen 5 können natürlich noch mehr als nur die zwei in Fig. 4 dargestellten zwei Strahlenbündel L,L' erzeugt werden. Entsprechend können noch höhere Aufösungen erreicht und/oder kann mit noch geringeren Spiegelhüben ε gearbeitet werden und/oder noch schneller gemessen werden. Ein teilweises Überlappen von im Strahlengang seitlich versetzten doppelbrechenden Elementen 5,5',... ist auch möglich und erlaubt die Erzeugung von mehr Strahlenbündeln unterschiedlicher Weglängen als doppelbrechende Elemente 5,5',... aufgewiesen werden.

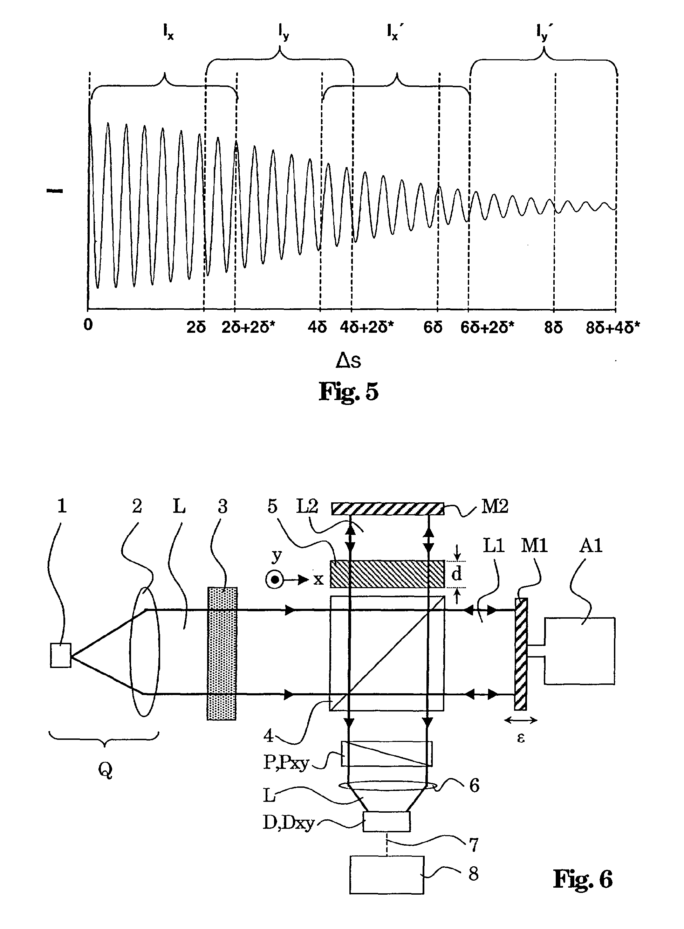

Fig. 5 zeigt, analog zu Fig. 2, ein Spektrum wie es mit einem FTS gemäss Fig. 4 aufgenommen werden könnte. Die Intensitäten von Iₓ wurden mittels des Detektors Dx detektiert, die Intensitäten von I_{y} wurden mittels des Detektors Dy detektiert, die Intensitäten von Iₓ' wurden mittels des Detektors Dx' detektiert, die Intensitäten von I_{y}' wurden mittels des Detektors Dy' detektiert.

Fig. 6 zeigt eine weitere vorteilhafte Ausführungsform der Erfindung. Sie entspricht weitgehend der in Fig. 1 dargestellten Ausführungsform und wird ausgehend davon beschrieben. Hier sind aber die Polarisationseinheit P und die Detektionseinheit D verändert. Anstelle von je einem Polarisator pro Polarisationsrichtung (x,y) weist in Fig. 6 die Polarisationseinheit P nur einen Polarisator Pxy (pro Strahlenbündel, vergleiche Fig. 4) auf. Dieser Polarisator Pxy ist drehbar ausgeführt. Durch Drehung um 90° um eine Achse parallel zum Licht L kann die Durchlassrichtung des Polarisators Pxy wahlweise x-oder y-polarisiertes Licht Lx oder Ly transmittieren. Das transmittierte Licht L kann, wie in Fig. 6 dargestellt, mittels einer Linse 6 auf den (einzigen) Detektor Dxy der Detektionseinheit D fokussiert werden. In einem solchen FTS werden die Teil-Interferogramme Iₓ,I_{y} zeitlich nacheinander gemessen. Die Strahlen Lx,Ly, welche in der Ausführungsform gemäss Fig. 1 verschiedene Strahlenverläufe haben, können in der Ausführungsform gemäss Fig. 6 denselben physikalischen Weg beschreiben.

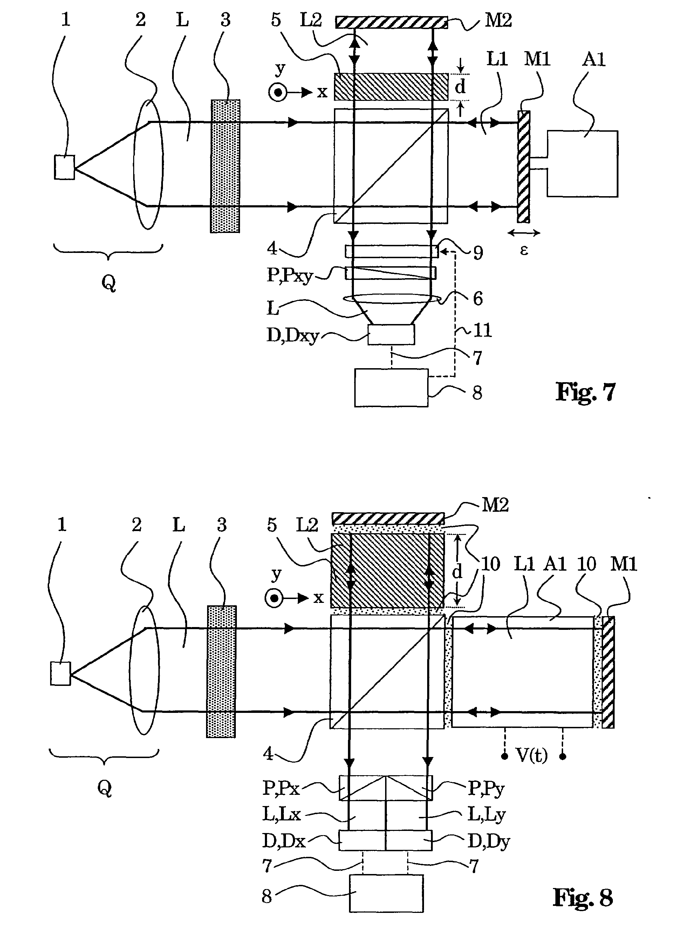

Fig. 7 zeigt einen alternativen Aufbau zu dem FTS aus Fig. 6. Anstelle eines drehbaren Polarisators Pxy weist die Polarisationseinheit P einen vorzugsweise nicht-drehbaren, fixierten Polarisator Pxy und eine Polarisationskontrolleinheit 9 auf. Mittels der Polarisationskontrolleinheit 9 kann die Polarisationsrichtung des Lichtes um 90° gedreht werden, vorzugsweise ohne dass bewegliche Teile involviert sind. Beispielsweise kann die Polarisationskontrolleinheit 9 im wesentlichen aus einem elektrooptischen Kristall bestehen. Eine Polarisationsebenendrehung um genau 90° gibt es dabei nur in einem relativ kleinen Wellenlängenbereich. Vorzugsweise wird die Polarisationskontrolleinheit 9 über eine Steuerleitung 11 durch die Signalverarbeitung 8 gesteuert.

Fig. 8 zeigt eine besonders vorteilhafte Ausführungsform. Sie wird ausgehend von Fig. 1 beschrieben. Als Weglängenveränderungsmittel A1 ist hier ein elektrooptischer Modulator A1 vorgesehen. Dieser elektrooptische Modulator A1 ist im Lichtweg L2 zwischen dem Strahlteiler 4 und dem Spiegel M1 angeordnet. Die Hauptachsen der elektrooptisch induzierten Doppelbrechung des Modulators A1 sind parallel zu den Polarisationsachsen x,y ausgerichtet. Vorzugsweise wird ein solcher Modulator A1 verwendet, der für beide Polarisationsrichtungen x,y denselben Wegunterschied einführt. Ist der elektrooptisch induzierte Wegunterschied für x-polarisiertes und y-polarisiertes Licht verschieden, so werden können die Teil-Interferogramme Iₓ,I_{y} zeitlich nacheinander gemessen werden, und der Spannungshub der am Modulator A1 anliegenden Spannung V(t) wird vorteilhaft jeweils so gewählt, dass sich für beide Polarisationen x,y die gleiche Wegänderung δ ergibt. Der Wegunterschied kann erhöht werden, wenn auch im zweiten Lichtweg L2 ein elektrooptischer Modulator eingesetzt wird (nicht dargestellt). Dieser wird vorteilhaft gegenphasig zum ersten Modulator betrieben. In dem Fall, dass in beiden Lichwegen L1,L2 elektrooptische Modulatoren angeordnet sind, können diese so betrieben werden, dass sich für beide Polarisationen x,y die gleiche Wegänderung, nämlich δ ergibt, so dass kein Überlapp zwischen Teil-Interferogrammen vorkommt.

Zusätzlich sind in Fig. 8 noch mehrere Bestandteile des FTS aneinander fixiert. Der Spiegel M2, der Strahlteiler 4, der elektrooptische Modulator A1 und der Spiegel M1 sind alle miteinander verklebt. Es ist mit Vorteil auch noch möglich, wie in Fig. 3 dargestellt, auch noch die Polarisationseinheit P und die Detektionseinheit D mit den anderen genannten Bestandteilen zu verbinden. Auf diese Weise kann ein extrem robustes FTS realisiert werden, das keine beweglichen Teile aufweisen muss. Eine alternative Möglichkeit, die Bestandteile aneinander zu fixieren, ist beispielsweise das Eingiessen der Bestandteile in eine Vergussmasse, beispielsweise ein Harz.

Der oder die Spiegel M1,M2 können selbstverständlich auch als eine Verspiegelung, beispielsweise eines elektooptischen Modulators A1, ausgebildet sein.

Hier, wie auch in anderen Ausführungsformen, ist es mit Vorteil möglich, das Licht teilweise in optischen Fasern zu leiten. Insbesondere kann das Licht L von der Lichtquelle Q zur Probe 3 und/oder von der Probe 3 zum Strahlteiler 4 mittels optischer Fasern geführt werden. Das Licht kann mit wenig Verlust über weite Strecken geführt werden, so dass verschiedene Komponenten des FTS an weit voneinander entfernten Orten anordnbar sind. Insbesondere kann die Probe 3 und/oder die Lichtquelle Q weit von den weiteren Bestandteilen des FTS entfernt angeordnet sein.

Erfindungsgemässe FTS können vorteilhaft eingesetzt werden in der chemischen Prozesstechnik und in der petrochemischen Industrie, in der Nahrungsmittelindustrie, oder zur Messung von Spurengasen, bei Untersuchungen der Atmosphäre, in der Astrophysik und in anderen wissenschaftlichen Anwendungen.

Anwendungen im nahen (statt mittleren) Infrarot sind in manchen Fällen, beispielsweise bei festen Proben, vorteilhaft. Ein Vorteil dieses Spektralbereichs ist, dass dort eine typischerweise relativ geringere Absorption der zu untersuchenden Proben 3 vorliegt. Die optische Weglänge des durch die Probe 3 verlaufenden Lichtweges kann typischerweise zwischen 0.5 mm und 50 mm betragen, während sie im mittleren Infrarot wegen der im allgemeinen höheren Absorption teilweise nur typischerweise 5 µm bis 50 µm betragen darf, um noch geeignete Signale zu erhalten.
Durch die längeren möglichen Weglängen in der Probe 3 ist die Präparation der Probe 3 weniger aufwendig, und die Messungen sind weniger anfällig auf Verunreinigungen der Oberfläche des Probenbehälters. Die Absorptionsbanden im nahen Infrarot entsprechen verschiedenen Obertönen (1. - 3. Oberton) der Banden im mittleren Infrarot. Der Wellenlängenbereich dieser Oberton-Absorption liegt zwischen etwa 700 nm und 2000 nm (14000 cm⁻¹ - 5000 cm⁻¹). Auch noch vorteilhaft ist der Übergangsbereich zum mittleren Infrarot zwischen 2000 nm und 2500 nm (5000 cm⁻¹ - 4000 cm⁻¹).

Als Lichterzeuger 1 oder Lichtquelle Q können beispielsweise Halogenlampen, schwarze Strahler, breitbandige Faserlichtquellen, also dotierte und optisch gepumpte Glasfasern, oder auch breitbandige

Halbleiterquellen eingesetzt werden. Insbesondere kann eine Kombination mehrerer unterschiedlicher Lichterzeuger, beispielsweise unterschiedlich dotierter Fasern, vorteilhaft sein, da dadurch ein breiterer Spektralbereich abdeckbar ist.

Als Proben 3 kommen gasförmige, flüssige und auch feste Stoffe in Frage. Es ist auch möglich, dass die Probe 3 gleichzeitig auch Lichterzeuger 1 ist, beispielsweise im Falle floureszierender Proben 3.

Vorteilhaft ist die Probe 3 im Lichtstrahl L zwischen Lichtquelle Q und Strahlteiler 4 angeordnet. Sie kann aber zwischen Strahlteiler 4 und der Detektionseinheit D angeordnet sein.

Es ist auch mit Vorteil möglich, in jedem der zwei Lichtwege L1,L2 je mindestens ein doppelbrechendes Element 5 anzuordnen. Diese können so in den Lichtwegen L1,L2 angeordnet sein, dass sich die Lichtbündel, die sie durchstrahlen, im zusammengeführten Licht überlappen und somit mehr Teil-Interferogramme als zweimal die Anzahl (planer, homogener) doppelbrechender Elemente 5 bilden.

Wenn mehrere doppelbrechende Elemente 5,5' in einem der Lichtwege L1,L2 angeordnet sind, können diese so in dem Lichtweg L1,L2 angeordnet sein, dass sich die Lichtbündel, die sie durchstrahlen, überlappen und somit mehr Teil-Interferogramme als zweimal die Anzahl (planer, homogener) doppelbrechender Elemente 5 bilden.

Die Detektionseinheit D kann einen oder mehrere nicht-ortsaufgelöste Detektoren wie Photodioden oder Photomultiplier enthalten. Die Detektionseinheit D kann aber auch vorteilhaft einen oder gegebenenfalls mehrere ortsaufgelöste Detektoren wie beispielsweise Mehrkanalplatten (multichannel plates) aufweisen. Mittels eines solchen ortsaufgelösten Detektors können mehrere getrennt zu detektierende Lichtbündel, die die Polarisationseinheit P durchstrahlt haben, gleichzeitig detektiert werden.

Die Brechungsindizes, n₀ und nₑ doppelbrechender Elemente 5 weisen im allgemeinen eine gewisse Abhängigkeit von der Wellenlänge auf (Dispersion). Diese ist gewöhnlich bekannt und kann vorteilhaft in der Signalverarbeitung 8 berücksichtigt werden. Ferner können no und ne eine Abhängigkeit von der Temperatur aufweisen. Diese kann vorteilhaft in der Signalverarbeitung 8 berücksichtigt werden, wobei dafür eine Temperaturmessung im Bereich des doppelbrechenden Elementes 5 vorteilhaft ist.

Zur Wellenlängeneichung des FTS kann Licht mit mindestens einer bekannten Wellenlänge (beispielsweise Licht einer Neon-Spektrallampe) durch das FTS geschickt werden. Proben- und Eichmessungen können gleichzeitig oder nacheinander vorgenommen werden.

### Bezugszeichenliste

- 1: Lichterzeuger
- 2: Kollimator
- 3: Probe
- 4: Strahlteiler
- 5,5': doppelbrechendes Element, doppelbrechender Kristall
- 6: Linse
- 7: Signalleitung
- 8: Signalverarbeitung
- 9: Polarisationskontrolleinheit
- 10: Verbindungsmittel, Klebstoff
- 11: Steuerleitung

- A1: erstes Weglängenveränderungsmittel, Antrieb, piezoelektrischer Aktuator, elektrooptischer Modulator, mikromechanischer Antrieb, elektromagnetischer Antrieb
- A2: zweites Weglängenveränderungsmittel, Antrieb, piezoelektrischer Aktuator, elektrooptischer Modulator, mikromechanischer Antrieb, elektromagnetischer Antrieb
- d,d': Dicke eines doppelbrechenden Elementes (in Durchstrahlrichtung)
- D: Detektionseinheit
- Dx,Dy,Dx',Dy',Dxy,Dxy': Detektor, Photodiode
- I: Gesamt-Interferogramm
- Iₓ,I_{y},Iₓ',I_{y}': Teil-Interferogramme für x- beziehungsweise y-polarisiertes Licht
- L: Licht, Lichtstrahl
- L,L': Strahlenbündel (mit unterschiedlichen Wegunterschieden zwischen x- und y-polarisiertem Licht im Strahlenbündel)
- L1: erster Lichtweg
- L2: zweiter Lichtweg
- Lx: x-polarisiertes Licht, x-polarisierter Lichtstrahl
- Ly: y-polarisiertes Licht, y-polarisierter Lichtstrahl
- M1,M2: Spiegel
- n₀: ordentlicher Brechungsindex
- nₑ: ausserordentlicher Brechungsindex
- P: Polarisationseinheit
- Px,Py,Px',Py',Pxy,Pxy': Polarisator
- Q: Lichtquelle
- V(t): zeitlich veränderliche elektrische Spannung
- x: Achse der Doppelbrechung, Polarisationsachse
- y: Achse der Doppelbrechung, Polarisationsachse

- δ: Wegunterschied zwischen x- und y-polarisiertem Licht (nach einmaligem Durchlaufen eines doppelbrechenden Elements), δ = d·Δn
- δ': Wegunterschied zwischen x- und y-polarisiertem Licht (nach einmaligem Durchlaufen mindestens eines zweiten doppelbrechenden Elements)
- δ*: δ* = Δn(d' - d)
- ε: Spiegelhub, halber Wegunterschied aufgrund des mindestens einen Weglängenveränderungsmittels
- Δn: Doppelbrechung des doppelbrechenden Elementes, Δn = |n₀-nₑ|
- Δs: Wegunterschied

## Patentansprüche

1. Spektrometer umfassend
- eine Lichtquelle (Q) zur Erzeugung kollimierten polychromatischen Lichts (L),
- einen Strahlteiler (4) zur Aufteilung des Lichtes (L) auf einen ersten Lichtweg (L1) und einen zweiten Lichtweg (L2) und zum Zusammenführen des Lichtes (L) nach Durchlaufen des ersten Lichtweges (L1) beziehungsweise des zweiten Lichtweges (L2),
- mindestens ein erstes Weglängenveränderungsmittel (A1) zur Veränderung optischer Weglängen des ersten Lichtweges (L1) gegenüber optischen Weglängen des zweiten Lichtweges (L2) um einen optischen Wegunterschied 2ε,
- eine Detektions-Einheit (D) zur Erzeugung mindestens zweier Teil-Interferogramme Iₓ und I_{y}, und
- eine Auswerte-Einheit (8) zur Erzeugung eines Gesamt-Interferogramms I durch Kombination der mindestens zwei Teil-Interferogramme Iₓ und I_{y} und zur Bestimmung eines Spektrums mittels einer Fourier-Transformation des Gesamt-Interferogramms I,
**dadurch gekennzeichnet,**
- **dass** in mindestens einem der beiden Lichtwege (L1,L2) mindestens ein doppelbrechendes Element (5) mit zwei zueinander orthogonalen Achsen x,y der Doppelbrechung angeordnet ist, welche Achsen x,y zwei Polarisationsachsen x,y definieren, und wobei durch das mindestens eine doppelbrechende Element (5) ein optischer Wegunterschied 2δ zwischen x-polarisierten Lichtwellen (Lx) und y-polarisierten Lichtwellen (Ly) erzeugbar ist,
- **dass** eine Polarisationseinheit (P) vorhanden ist, mittels der aus dem zusammengeführten Licht (L) ein Strahl (Lx) im wesentlichen x-polarisierten Lichts (Lx) und ein Strahl (Ly) im wesentlichen y-polarisierten Lichts (Ly) erzeugbar ist, und
- **dass** mittels der Detektions-Einheit (D) der Strahl (Lx) im wesentlichen x-polarisierten Lichts (Lx) detektierbar, und durch Messung der detektierten Intensität des im wesentlichen x-polarisierten Lichts (Lx) als Funktion des Wegunterschiedes 2ε das mindestens eine Teil-Interferogramm Iₓ erzeugbar ist, und
- **dass** mittels der Detektions-Einheit (D) der Strahl (Ly) im wesentlichen y-polarisierten Lichts (Ly) detektierbar, und durch Messung der detektierten Intensität des im wesentlichen y-polarisierten Lichts (Ly) als Funktion des Wegunterschiedes 2ε das mindestens eine Teil-Interferogramm I_{y} erzeugbar ist.

2. Spektrometer gemäss Anspruch 1, **dadurch gekennzeichnet, dass** der Wegunterschied 2ε grösser oder gleich dem Wegunterschied 2δ ist.

3. Spektrometer gemäss einem der vorangegangenen Ansprüche, **dadurch gekennzeichnet, dass** die Achsen x,y der Doppelbrechung im wesentlichen senkrecht zur Strahlrichtung des das doppelbrechende Element (5) durchstrahlenden Lichts (L1;L2) ausgerichtet sind, und dass diejenigen Flächen des doppelbrechenden Elementes (5), durch welche das Licht (L1;L2) in das doppelbrechende Element (5) einstrahlt oder durch welche das Licht (L1;L2) das doppelbrechende Element (5) verlässt, im wesentlichen senkrecht zur Strahlrichtung des das doppelbrechende Element (5) durchstrahlenden Lichts (L1;L2) ausgerichtet sind.

4. Spektrometer gemäss einem der vorangegangenen Ansprüche, **dadurch gekennzeichnet, dass** in mindestens einem der beiden Lichtwege (L1;L2) das mindestens eine doppelbrechende Element (5) derart ausgebildet ist und/oder in mindestens einem der beiden Lichtwege (L1;L2) oder in beiden Lichtwegen (L1,L2) zusammen mehr als ein doppelbrechendes Element (5,5'...) so angeordnet ist, dass in dem zusammengeführten Licht (L) N ≥ 2 Strahlenbündel (L,L',...) gebildet sind, welche N Wegunterschiede 2δ,2δ'... zwischen x-polarisierten Lichtwellen (Lx) und y-polarisierten Lichtwellen (Ly) aufweisen, und dass N Teil-Interferogramme Iₓ,Iₓ'... und mindestens N Teil-Interferogramme I_{y},I_{y}'... erzeugbar sind.

5. Spektrometer gemäss Anspruch 4, **dadurch gekennzeichnet, dass** die Wegunterschiede 2ε und 2δ,2δ',2δ''... so gewählt sind, dass die Teil-Interferogramme Iₓ,I_{y},Iₓ',I_{y}' zu einem zusammenhängenden Gesamt-Interferogramm kombinierbar sind.

6. Spektrometer gemäss einem der vorangegangenen Ansprüche, **dadurch gekennzeichnet, dass** das mindestens eine Weglängenveränderungsmittel (A1) einen piezoelektrischen Aktuator (A1), einen mikromechanischen Antrieb (A1) oder einen elektrooptischen Modulator (A1) beinhaltet.

7. Spektrometer gemäss einem der vorangegangenen Ansprüche, **dadurch gekennzeichnet, dass** in dem zweiten Lichtweg (L2) ein zweites Weglängenveränderungsmittel (A2) zur Veränderung optischer Weglängen des zweiten Lichtweges (L2) vorhanden ist.

8. Spektrometer gemäss einem der vorangegangenen Ansprüche, **dadurch gekennzeichnet, dass** die Polarisationseinheit (P) pro doppelbrechendem Element (5,5') mindestens zwei Polarisatoren (Px,Py,Px',Py') aufweist, und dass die Detektionseinheit (D) pro Polarisator je einen Detektor (Dx,Dy,Dx',Dy') aufweist.

9. Spektrometer gemäss einem der Ansprüche 1-8, **dadurch gekennzeichnet, dass** die Polarisationseinheit (P) pro doppelbrechendem Element (5,5') mindestens je einen Polarisator (Pxy,Pxy') aufweist, und dass die Detektionseinheit (D) pro Polarisator je einen Detektor (Dxy,Dxy') aufweist, wobei die Polarisatoren (Pxy,Pxy') drehbar sind oder die Polarisationseinheit (P) pro doppelbrechendem Element (5,5') mindestens je eine Polarisationskontrolleinheit (9) aufweist.

10. Spektrometer gemäss einem der vorangegangenen Ansprüche, **dadurch gekennzeichnet, dass** der Strahlteiler (5) und die von drehbaren Polarisatoren freie Polarisationseinheit (P) und die Detektionseinheit (D) mechanisch aneinander fixiert sind, und/oder der Strahlteiler (5) und das mindestens eine doppelbrechende Element (5) und ein in demjenigen Lichtweg (L1;L2), in welchem das mindestens eine doppelbrechende Element (5) angeordnet ist, angeordneter Spiegel (M2) mechanisch aneinander fixiert sind.

11. Verfahren zur Bestimmung eines optischen Spektrums, wobei kollimiertes polychromatisches Licht (L) auf zwei Lichtwege (L1,L2) aufgeteilt und wieder zusammengeführt wird, wobei mittels eines Weglängenveränderungsmittels (A1) optische Weglängen des ersten Lichtweges (L1) gegenüber optischen Weglängen des zweiten Lichtweges (L2) um einen optischen Wegunterschied 2ε verändert werden, wobei mindestens zwei Teil-Interferogramme Iₓ und I_{y} aufgenommen werden, und wobei die mindestens zwei Teil-Interferogramme Iₓ und I_{y} zu einem Gesamt-Interferogramm I kombiniert werden, und wobei das Spektrum mittels einer Fourier-Transformation des Gesamt-Interferogramms I bestimmt wird,
**dadurch gekennzeichnet, dass**
- in mindestens einem der beiden Lichtwege (L1,L2) mindestens ein doppelbrechendes Element (5) mit zwei zueinander orthogonalen Achsen x,y der Doppelbrechung angeordnet wird, durch welche Achsen x,y zwei Polarisationsachsen x,y definiert werden, und wobei durch das mindestens eine doppelbrechende Element (5) ein optischer Wegunterschied 2δ zwischen x-polarisierten Lichtwellen (Lx) und y-polarisierten Lichtwellen (Ly) erzeugt wird,
- aus dem zusammengeführten Licht (L) gleichzeitig oder zeitlich versetzt ein Strahl (Lx) im wesentlichen x-polarisierten Lichts (Lx) und ein Strahl (Ly) im wesentlichen y-polarisierten Lichts (Ly) erzeugt wird,
- der Strahl (Lx) im wesentlichen x-polarisierten Lichts (Lx) detektiert wird und durch Messung der detektierten Intensität des im wesentlichen x-polarisierten Lichts (Lx) als Funktion des Wegunterschiedes 2ε das mindestens eine Teil-Interferogramm Iₓ erzeugt wird, und
- der Strahl (Ly) im wesentlichen y-polarisierten Lichts (Ly) detektiert wird und durch Messung der detektierten Intensität des im wesentlichen y-polarisierten Lichts (Ly) als Funktion des Wegunterschiedes 2ε das mindestens eine Teil-Interferogramm I_{y} erzeugt wird.
